Europäisches Patentamt

(19) European Patent Office

Office européen des brevets

(11) Veröffentlichungsnummer: **0 098 838**
**B1**

(12) # EUROPÄISCHE PATENTSCHRIFT

(45) Veröffentlichungstag der Patentschrift:
13.11.85

(51) Int. Cl.⁴: **G 03 B 9/00, C 25 D 1/04**

(21) Anmeldenummer: **83900182.3**

(22) Anmeldetag: **22.12.82**

(86) Internationale Anmeldenummer:
**PCT/DE 82/00232**

(87) Internationale Veröffentlichungsnummer:
**WO 83/02337 (07.07.83 Gazette 83/16)**

(54) VERFAHREN ZUR HERSTELLUNG VON LAMELLEN FÜR LICHTOPTISCHE VERSCHLÜSSE OPTISCHER GERÄTE.

(30) Priorität: **24.12.81 DE 3151290**

(43) Veröffentlichungstag der Anmeldung:
**25.01.84 Patentblatt 84/4**

(45) Bekanntmachung des Hinweises auf die Patenterteilung:
**13.11.85 Patentblatt 85/46**

(84) Benannte Vertragsstaaten:
**FR GB**

(56) Entgegenhaltungen:
**DE - B - 2 828 625**

**Kodak Publication Nr. P79, 1970, Rochester (USA), "An Introduction to photofabrication using Kodak photosensitive resists", s. Seiten 4-7**

(73) Patentinhaber: **ERNST LEITZ WETZLAR GMBH, Ernst-Leitz-Strasse 30 Postfach 20 20, D-6330 Wetzlar 1 (DE)**

(72) Erfinder: **GÖBERT, Klaus, Vogelsang 28, D-6330 Wetzlar (DE)**
Erfinder: **BÜRING, Ulrich, Erlenweg 16, 6336 Solms-Niederbiel (DE)**

## Beschreibung

Die Erfindung betrifft ein Verfahren zur Herstellung von Lamellen für lichtoptische Verschlüsse optischer Geräte, beispielsweise fotografischer Kameras bzw. fotografischer Objektive.

Derartige Lamellen werden bisher überwiegend aus Stahl, und zwar durch Ausstanzen aus Federbandstahl, hergestellt. Die dabei als einzelne Teile anfallenden Lamellen müssen entgratet und zur Vermeidung von Oberflächenreflexionen mit einer schwarzen, matten bzw. glanzlosen Beschichtung versehen und zuvor für diesen Arbeitsgang entsprechend vorbereitet werden. Außerdem erfordern die Lamellen bei den mitunter auftretenden hohen Kräften beim Beschleunigen und Abbremsen derselben eine ausreichende mechanische Stabilität insbesondere im Bereiche der Aussparungen für Lager- und Steuerzwecke. Die Aussparungen werden daher mit aufgenieteten Verstärkungen versehen, was bei den wiederum einzeln vorliegenden Lamellen einen erheblichen Zeitaufwand bedeutet.

In Anbetracht der relativ hohen Herstellungskosten sind daher aus thermoplastischem Kunststoff bestehende Blendenlamellen bekanntgeworden, welche in einem Arbeitsgang in einem Spritzgießwerkzeug herstellbar sind. Dabei können mehrere Blendenlamellen in einem Arbeitsgang gleichzeitig hergestellt und durch Oberflächenbehandlung der Werkzeughohlräume mittels Sandstrahlen, Ätzen od. dgl. mit einer matten Oberfläche versehen werden. Die zur Lagerung und Steuerung der Blendenlamellen dienenden Lagerzapfen, Stifte od. dgl. werden mitgespritzt. Die Dauerhaftigkeit und Härte derartiger Kunststofflamellen ist jedoch geringer als diejenige der aus Stahl gefertigten Lamellen.

In der DE-OS 28 28 625 ist ein Verfahren zur Herstellung von Präzisionsflachteilen, u. a. auch Blenden, auf galvanoplastischem Wege beschrieben. Dabei wird das herkömmliche Verfahren des Belichtens der Photoresistschicht durch eine Maske, die über einen metallischen Träger und die Resistschicht aufgelegt wird, durch eine Belichtung durch einen Glasträger hindurch ersetzt, der mit einer einseitigen Metallisierung versehen ist und damit die Belichtungsmaske bildet. Auf diese Weise wird das Auflösevermögen der Photoresistschicht gesteigert. Die Herstellung einer Vielzahl verpackungs- oder gebrauchsfertiger Präzisionsflachteile in einem einzigen Arbeitsgang wird in der DE-OS 2 828 625 nicht beschrieben.

Weiterhin ist es aus Kodak Publication Nr. P 79, Seiten 4 bis 7, bekannt, flächenförmige Präzisionsteile galvanoplastisch herzustellen. Auch dieser Druckschrift ist kein Hinweis auf ein Herstellungsverfahren zu entnehmen, das es ermöglicht, die Bearbeitungsvorgänge bei der Herstellung von Lamellen für lichtoptische Verschlüsse fotografischer Geräte abzukürzen.

Der Erfindung liegt daher die Aufgabe zugrunde, ein Verfahren zur Herstellung von Lamellen für lichtoptische Verschlüsse optischer Geräte anzugeben, wobei die Lamellen einerseits hinsichtlich Widerstandsfähigkeit, Härte und Festigkeit gegen mechanische Einwirkungen hohe, d. h. die gleichen Ansprüche wie die bekannten Stahllamellen erfüllt und andererseits wirtschaftlich, d. h. ohne großen Fertigungsaufwand, herstellbar sind.

Diese Aufgabe wird erfindungsgemäß dadurch gelöst, daß durch Aufbelichten einer Vielzahl von Vorlagen mit Stegen und Aussparungen auf eine mit Fotolack beschichtete Metallplatte und anschließende galvanische Beschichtung derselben eine Folie erzeugt wird, welche nach Ablösen von der Metallplatte einer Oberflächenbehandlung unterworfen und in den Aussparungen mit Nieten versehen wird, worauf die einzelnen Lamellen durch Ausstanzen von der Folie abgetrennt werden. Die mit dem erfindungsgemäßen Verfahren erzielten Vorteile liegen insbesondere darin, daß eine Vielzahl von Lamellen in der Folie vorliegen und dort belassen werden, bis alle anschließenden Bearbeitungsvorgänge wie Oberflächenbehandlung und Vernieten abgeschlossen sind. Dadurch kann die einzelne Lamelle mit geringen Kosten hergestellt werden. Außerdem sind die gewöhnlich auf galvanoplastisch erzeugtem Wege Metalle korrosionsbeständig, so daß Korrosionserscheinungen an nicht beschichteten Stellen der Lamellenoberfläche nicht zu erwarten sind.

Gemäß der Erfindung umfaßt die Folie eine Vielzahl von durch trennbare Stege gehaltene Lamellen sowie ein entsprechendes Umfeld. Nach der Oberflächenbehandlung sowie dem Nieten bedarf es sodann nur noch des Heraustrennens der Lamellen aus dem Umfeld, die sodann automatisch verpackt werden können. Zum Anbringen der Nieten ist jede Lamelle mit Aussparungen für Lager- und Steuerzwecke versehen. Zweckmäßig erfolgt das Einsetzen der Nieten mittels NC-Automaten.

Als galvanoplastisch erzeugtes Folienmaterial hat sich Nickel als besonders vorteilhaft erwiesen. Die Korrosionsbeständigkeit von Nickel ist ausgezeichnet, und außerdem ist es hart und dauerhaft. Die Konturenschärfe von aus Nickel galvanoplastisch hergestellten Lamellen ist einwandfrei.

Die Lamellen können dadurch hergestellt sein, daß mittels einer der Folie entsprechenden Zeichnung eine Fotovorlage erstellt und durch die Fotovorlage hindurch eine mit einem Fotolack beschichtete Metallfläche belichtet wird, worauf durch galvanoplastische Abscheidung die Folie auf der Metallfläche erzeugt wird. In der Metallfolie ist die auf der Fotovorlage gezeichnete Lamellenform als Unterbrechung des Niederschlags dargestellt, und die einzelnen Lamellen hängen nur noch über schmale Stege nahezu punktförmig mit dem Umfeld zusammen.

In der Zeichnung ist schematisch ein Ausführungsbeispiel nach der Erfindung veranschaulicht. Es zeigt

Fig. 1 eine galvanoplastisch erzeugte Folie mit darin angeordneten Lamellen, in perspektivischer Darstellung, und

Fig. 2 einen Ausschnitt gemäß Fig. 1 mit zwei Lamellen nebst Umfeld in leicht vergrößerter Darstellung in der Draufsicht.

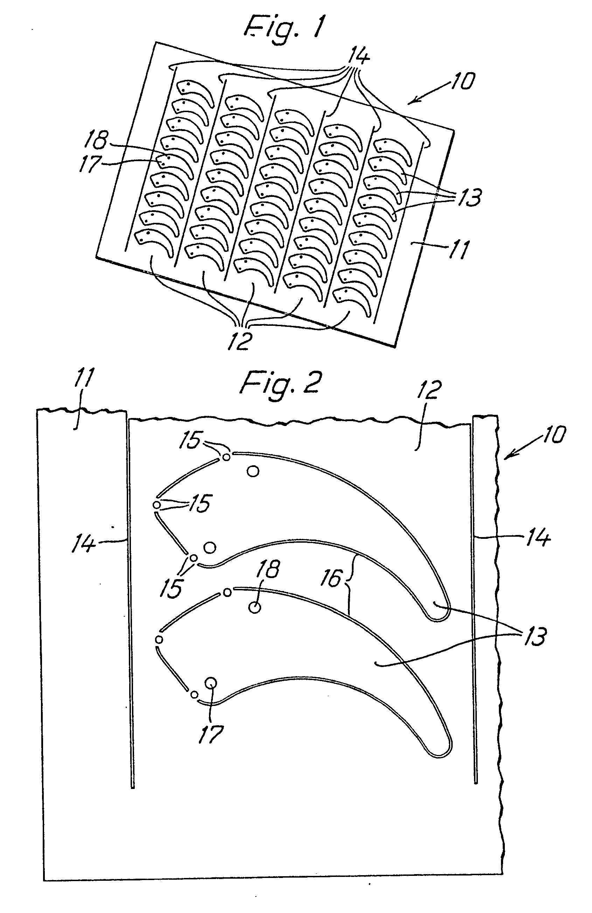

In Fig. 1 ist eine auf galvanoplastischem Wege erzeugte Folie 10, beispielsweise eine Nickelfolie, dargestellt. Die Folie 10 umfaßt ein Umfeld 11, in welchem in einer Anzahl von parallelen Bahnen 12 die einzelnen Lamellen 13 nacheinander angeordnet sind. Die einzelnen Bahnen 12 sind dabei durch linienförmige Unterbrechungen 14 voneinander getrennt, welche kurz vor den Schmalseiten der Folie 10 enden. Die einzelnen Lamellen 13 hängen über Stege 15 mit dem Umfeld 11 zusammen, während die Lamellenform jeweils durch kurvenförmige Unterbrechungen 16 in der Folienfläche gebildet ist.

Die Lamellen 13 sind mit kreisförmigen Aussparungen 17, 18 für Steuer- und Lagerzwecke versehen, und zwar bildet hier die Aussparung 17 den Lagerpunkt, um welchen die Lamelle 13 gedreht wird. Die Aussparungen 17, 18 werden zwecks Verstärkung mit hier nicht dargestellten Nieten versehen.

Die Herstellung der Lamellen erfolgt erfindungsgemäß wie nachstehend beschrieben:
Es wird auf einer zweilagigen Kunststoff-Folie, deren eine Lage farbig ist, eine Zeichnung der späteren Folie 10 erstellt; in die farbige Lage wird die vorgesehene Form, d. h. die kurvenförmigen Unterbrechungen 16, die Aussparungen 17, 18 usw., mittels eines Stichels eingeritzt. Diese Kunststoff-Folie wird sodann fotografiert. Das so erhaltene Filmbild dient als weitere Fotovorlage, die auf eine mit einer lichtempfindlichen Schicht versehene Metallplatte aufgelegt wird. Nach dem Belichten der Metallplatte werden die unbelichteten Stellen der lichtempfindlichen Schicht von der Platte durch Auswaschen entfernt. Die Platte dient dann als Katode und wird in ein galvanisches, ein Nickelsalz enthaltendes Bad eingebracht. An den unbelichteten Stellen scheidet sich dabei Nickel ab und die gewünschte Folie entsteht, welche von der Metallplatte leicht ablösbar ist und eine genaue Wiedergabe der Fotovorlage zeigt.

Anschließend wird die gewünschte Folie zur Gänze schwarz mattiert, beispielsweise lackiert oder galvanisch schwarz-verchromt und sodann in den Aussparungen 17, 18 mit Nieten versehen. Bis zum abschließenden Ausstanzen der einzelnen Lamellen und dem Verpacken wird auf diese Weise stets die gesame Folie mit ihren vielen Lamellen gleichzeitig bearbeitet.

Varianten des vorstehend beschriebenen Herstellungsverfahrens sind möglich. So kann beispielsweise an Stelle des Filmbildes als Fotovorlage eine fertige Nickelfolie verwendet werden.

## Patentanspruch

Verfahren zur Herstellung von Lamellen für lichtoptische Verschlüsse optischer Geräte, dadurch gekennzeichnet, daß durch Aufbelichten einer Vielzahl von Vorlagen (13) mit Stegen (15) und Aussparungen (17, 18) auf eine mit Fotolack beschichtete Metallplatte und anschließende galvanoplastische Beschichtung derselben eine Folie (10) erzeugt wird, welche nach Ablösen von der Metallplatte einer Oberflächenbehandlung unterworfen und in den Aussparungen (17, 18) mit Nieten versehen wird, worauf die einzelnen Lamellen (13) durch Ausstanzen von der Folie (10) abgetrennt werden.

## Claim

Method for the manufacture of laminae for optical shutters of optical devices, characterised thereby, that by projection of light through a plurality of masters (13) with webs (15) and cut-outs (17, 18) onto a metal plate coated with light-sensitive lacquer and subsequent galvanoplastic coating of the metal plate, there is produced a film (10), which after detachment from the metal plate is subjected to a surface treatment and provided with rivets in the cut-outs (17, 18), where-upon the individual laminae (13) are severed from the film (10) by punching-out.

## Revendication

Procédé de fabrication de lamelles por obturateurs photo-optiques d'appareils optiques caractérisé en ce que par l'exposition d'un grand nombre de modèles (13) avec des nervures (15) et des écidements (17, 18) sur une plaque de métal enduite d'une laque photosensible et ensuite enduction galvanoplastique de celle-ci, on produit une feuille (10) qui, après détachement de la plaque de métal, est soumise à un traitement de surface et est pourvue de rivets dans les évidements (17, 18) ensuite les lamelles (13) sont séparées de la feuille (10) par découpage à l'emporte-pièse.

## Fig. 1

## Fig. 2